# EUROPEAN PATENT APPLICATION

(11) **EP 3 575 607 A1**
(43) Date of publication of application: **04.12.2019**
(21) Application number: 19152262.2
(22) Date of filing: 17.01.2019
(51) Int. Cl.: F04D 13/06, F04D 29/58, F04D 29/42, H02K 5/20

(54) **ELECTRIC WATER PUMP**

(30) Priority: 01.06.2018 TW 10718922
(71) Applicant: Strong Way Industrial Co., Ltd., Kaohsiung City 81545 (TW)
(72) Inventor: LEE, Shui-Ta, 81545 Kaohsiung City (TW)
(74) Representative: Hübner, Gerd

(57) **Abstract**

An electric water pump (2) includes a machine body (3) and a water suctioning unit (4). The machine body (3) includes a main casing (31), a motor cover (32), a heat dissipation cover (33), a water cooling space (330) between the motor cover (32) and the heat dissipation cover (33), and an inside housing (34) surrounding an inside chamber (340). The main casing (31) has a water suctioning space (316). The water suctioning unit (4) includes a stator (41) around the inside housing (34) within the main casing (31), a spindle (42) connected to the motor cover (32), a rotor (43) within the inside chamber (340), and a vane unit (44) connected to the spindle (42) within the water suctioning space (316). The spindle (42) has a spindle channel (421) connected between the water cooling space (330) and the water suctioning space (316).

## Description

The disclosure relates to a water pump, and more particularly to an electric water pump.

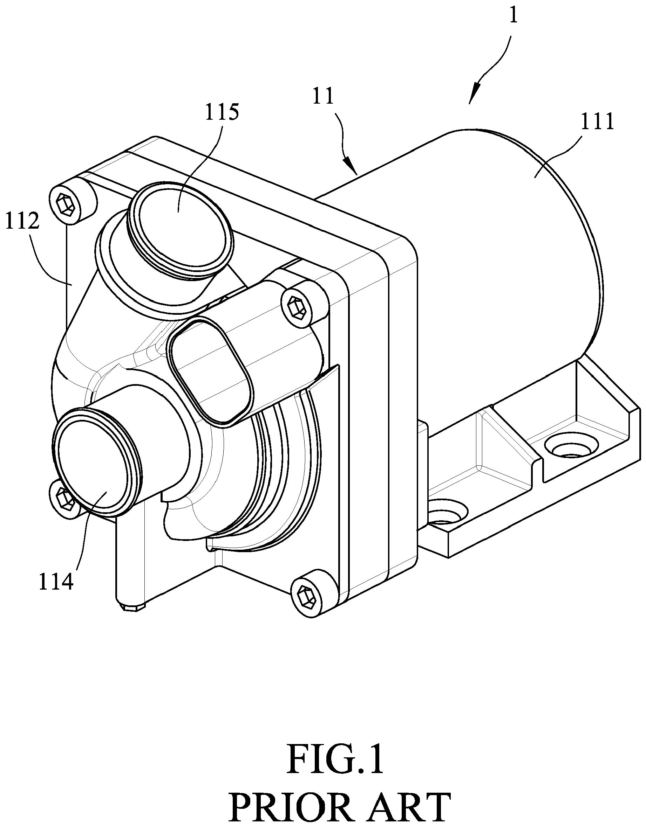

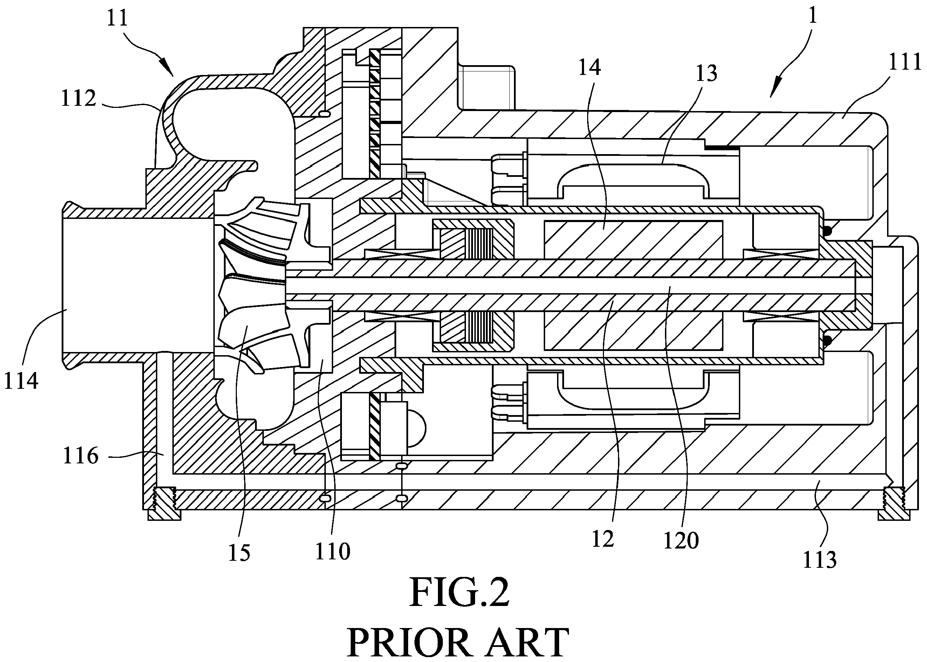

As shown in Figures 1 and 2, a conventional water pump 1 including a machine body 11 having a water suctioning space 110, a spindle 12 that is rotatably disposed in the machine body 11 and that has a spindle channel 120, a stator 13 that is fixed inside the machine body 11 and that is disposed around the spindle 12, a rotor 14 that is fixed to the spindle 12 and that is disposed between the spindle 12 and the stator 13, and a vane unit 15 that is fixed to the spindle 12 and that is disposed within the water suctioning space 110. The machine body 11 includes a casing 111, and a cover 112 covering the casing 111. The casing has a lateral water passage 113 communicating with the spindle channel 120 of the spindle 12. The water suctioning space 110 is formed between casing 111 and the cover 112. The cover 112 has an inlet port 114 communicating with the water suctioning space 110, an outlet port 115 communicating with the water suctioning space 110, and a connection passage 116 communicating with the inlet port 114 and the lateral water passage 113.

The stator 13 drives rotation of the rotor 14 and the spindle 12, so that the vane unit 15 is driven to rotate and generates a centrifugal suction force within the water suctioning space 110. As such, fluid can be sucked through the inlet port 114 into the water suctioning space 110. Due to the suctioning force of the water suctioning space 110, a negative pressure is produced in the spindle channel 120 of the spindle 12, such that part of the fluid entering the inlet port 114 is sucked by the negative pressure into the connection passage 116 and then flows to the water suctioning space 110 after passing the lateral water passage 113 and the spindle channel 120. Fluid in the water suctioning space 110 is expelled from the outlet port 115. Because fluid circulates through the connection passage 116, the lateral water passage 113, the spindle channel 120 and the water suctioning space 110, the spindle 12 and the rotor 14 are cooled. However, such a cooling path is unable to cool the stator 13 spaced apart from the spindle 12 and the rotor 14, thereby causing poor heat dissipation.

Therefore, an object of the disclosure is to provide an electric water pump that can alleviate at least one of the drawbacks of the prior art.

According to the disclosure, an electric water pump includes a machine body and a water suctioning unit.

The machine body includes a main casing, a motor cover connected to the main casing, a heat dissipation cover covering an outer surface of the motor cover, a water cooling space formed between the motor cover and the heat dissipation cover, and an inside housing that is disposed inside the main casing and the motor cover and that surrounds an inside chamber. The main casing has an inlet port, an outlet port, a water suctioning space communicating with the inlet and outlet ports and the inside chamber, and a lateral water passage communicating with the water suctioning space. The motor cover has a lateral communication channel fluidly connected between the lateral water passage and the water cooling space, a middle connection hole fluidly communicating with the water cooling space, and at least one through hole fluidly connected between the water cooling space and the inside chamber.

The water suctioning unit includes a stator that is disposed around the inside housing within the main casing, a spindle that extends in the inside chamber and that has a first end rotatably connected to the motor cover, a rotor that is disposed within the inside chamber and that rotates relative to the stator and drives rotation of the spindle, and a vane unit that is connected to a second end of the spindle and that is disposed within the water suctioning space. Rotation of the spindle drives the vane unit to rotate and generate a centrifugal suction force within the water suctioning space. The spindle has a spindle channel fluidly connected between the middle connection hole and the water suctioning space.

Other features and advantages of the disclosure will become apparent in the following detailed description of the embodiment (s) with reference to the accompanying drawings, of which:
Figure 1 is a perspective view of a conventional water pump;
Figure 2 is a sectional view of the conventional water pump;
Figure 3 is a sectional view illustrating an embodiment of an electric water pump according to the disclosure;
Figure 4 is a perspective view illustrating the embodiment of the electric water pump;
Figure 5 is a bottom view of the embodiment illustrating a motor cover of the electric water pump; and
Figure 6 is the same view as Figure 3 but illustrating fluid flowing directions of the electric water pump.

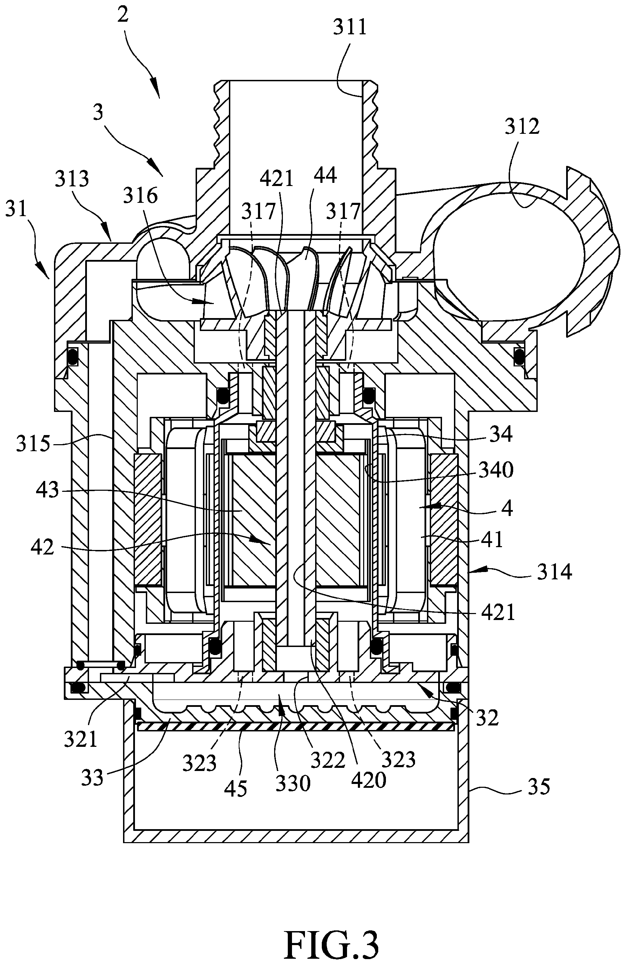

Figures 3 to 5 illustrate a first embodiment of an electric water pump 2 according to the disclosure. The electric water pump 2 includes a machine body 3 and a water suctioning unit 4.

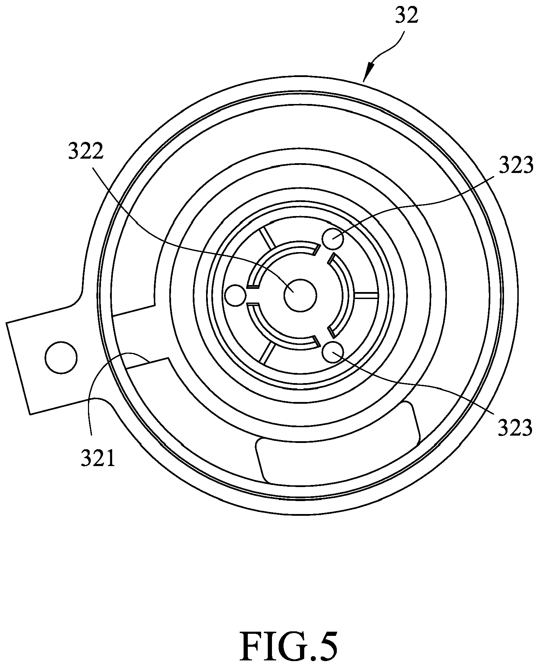

The machine body 3 includes a main casing 31, a motor cover 32 connected to the main casing 31, a heat dissipation cover 33 covering an outer surface of the motor cover 32, a water cooling space 330 formed between the motor cover 32 and the heat dissipation cover 33, an inside housing 34 that is disposed inside the main casing 31 and the motor cover 32 and that surrounds an inside chamber 340, and an auxiliary cover 35 that is connected to the heat dissipation cover 33. The main casing 31 is composed of a cap body 313 and a casing body 314. The cap body 313 has an inlet port 311 and an outlet port 312. The casing body 314 has two opposite ends respectively covered by the cap body 313 and the motor cover 32. In addition, the main casing 31 has a water suctioning space 316 that is defined by the casing body 314 and the cap body 313 and that communicates with the inlet and outlet ports 311, 312 and the inside chamber 340, and a lateral water passage 315 formed in the casing body 314 in communication with the water suctioning space 316. The casing body 314 has a plurality of orifices 317 (shown by dotted lines in Figure 3) fluidly communicating with the water suctioning space 316 and the inside chamber 340. As shown in Figures 3 and 5, the motor cover 32 has a lateral communication channel 321 fluidly connected between the lateral water passage 315 and the water cooling space 330, a middle connection hole 322 fluidly communicating with the water cooling space 330, and a plurality of through holes 323 disposed around the middle connection holes 322. Each through hole 323 (shown by dotted lines in Figure 3) is fluidly connected between the water cooling space 330 and the inside chamber 340.

The water suctioning unit 4 includes a stator 41, a spindle 42, a rotor 43, a vane unit 44 and a control module 45. The stator 41 is disposed around the inside housing 34 within the main casing 31. The spindle 42 extends in the inside chamber 340 and has a first end 420 rotatably connected to the motor cover 32. The rotor 43 is disposed within the inside chamber 340 and rotates relative to the stator 41 and drives rotation of the spindle 42. The vane unit 44 is connected to a second end 421 of the spindle 42 and is disposed within the water suctioning space 316. The control module 45 is attached to the heat dissipation cover 33 and covered by an auxiliary cover 35. The spindle 42 has a spindle channel 421 fluidly connected between the middle connection hole 322 and the water suctioning space 316.

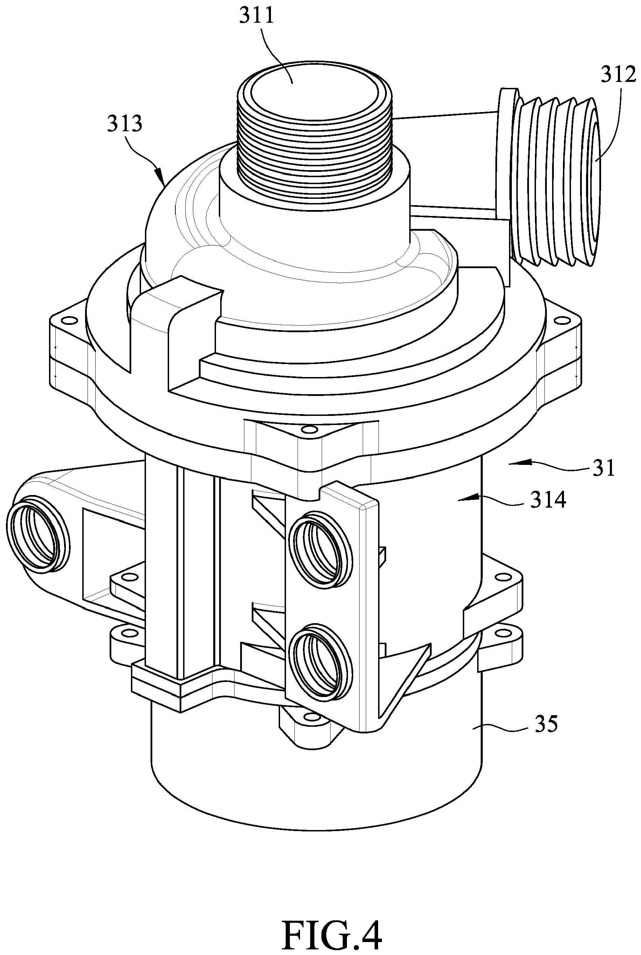

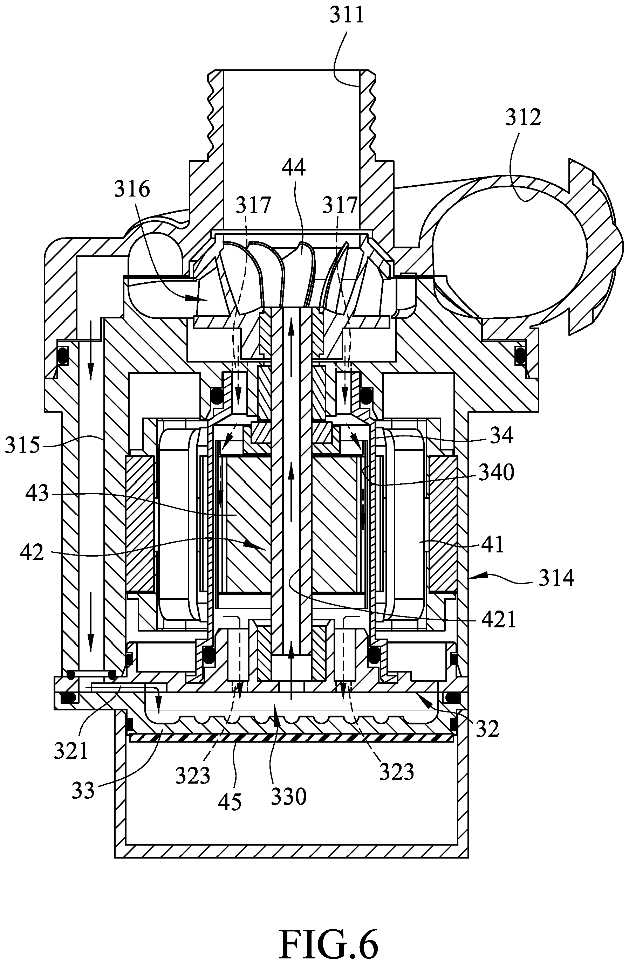

Referring to Figure 6, in combination with Figures 4 and 5, the control module 45 activates and controls rotation of the rotor 43 with respect to the stator 41, thereby driving rotation of the spindle 42 and the vane unit 44. When rotation of the spindle 42 drives the vane unit 44 to rotate and generate a centrifugal suction force within the water suctioning space 316, fluid outside of the water suctioning space 316 is sucked through the inlet port 311 into the water suctioning space 316. Part of fluid within the water suctioning space 316 is sucked by a negative pressure and flows through the lateral water passage 315 and the lateral communication channel 321 into the water cooling space 330 (shown by solid-line arrows in Figure 6). Part of fluid within the water suctioning space 316 passes through the orifices 317 of the casing body 314, the inside chamber 340, and the through holes 323 of motor cover 32 to enter the water cooling space 330 (shown by dotted-line arrows). Fluid within the water cooling space 330 is sucked by the negative pressure, passes through the middle connection hole 322 of the motor cover 32 and the spindle channel 421 of the spindle 42, and flows back into the water suctioning space 316. Fluid in the water suctioning space 316 is directed to and discharged from the outlet port 312 of the cap body 313. During the circulation of fluid, aside from being cooled by the fluid flowing through the spindle channel 421, the rotor 43 is immersed in and cooled by the fluid flowing within the inside chamber 340, thereby increasing heat dissipation area and enhancing heat dissipation effect. Because the inside chamber 340 of the inside housing 34 is filled with the fluid, the inside housing 34 can dissipate heat delivered from the stator 41 to the machine body 3. The heat dissipation cover 33, which carries fluid, can disperse heat from the control module 45 by heat conduction. In other words, the electric water pump 2 can improve heat dissipation and cooling efficiency by providing two fluid circulation paths: (1) fluid flowing through the water suctioning space 316, the lateral water passage 315, the lateral communication channel 321, the water cooling space 330, and the spindle channel 421 and returning back to the water suctioning space 316; (2) fluid flowing through the water suctioning space 316, the orifices 317, the inside chamber 340, the through holes 323, the water cooling space 330, the middle connection hole 322, the spindle channel 421 and returning back to the water suctioning space 316.

## Claims

1. An electric water pump (2), **characterized by**:
a machine body (3) including a main casing (31), a motor cover (32) connected to said main casing (31), a heat dissipation cover (33) covering an outer surface of said motor cover (32), a water cooling space (330) formed between said motor cover (32) and said heat dissipation cover (33), and an inside housing (34) that is disposed inside said main casing (31) and said motor cover (32) and that surrounds an inside chamber (340), said main casing (31) having an inlet port (311), an outlet port (312), a water suctioning space (316) communicating with said inlet and outlet ports (311, 312) and said inside chamber (340), and a lateral water passage (315) communicating with said water suctioning space (316), said motor cover (32) having a lateral communication channel (321) fluidly connected between said lateral water passage (315) and said water cooling space (330), a middle connection hole (322) fluidly communicating with said water cooling space (330), and at least one through hole (323) fluidly connected between said water cooling space (330) and said inside chamber (340); and
a water suctioning unit (4) including a stator (41) that is disposed around said inside housing (34) within said main casing (31), a spindle (42) that extends in said inside chamber (340) and that has a first end (420) rotatably connected to said motor cover (32), a rotor (43) that is disposed within said inside chamber (340) and that rotates relative to said stator (41) and drives rotation of said spindle (42), and a vane unit (44) that is connected to a second end (421) of said spindle (42) and that is disposed within said water suctioning space (316), rotation of said spindle (42) driving said vane unit (44) to rotate and generate a centrifugal suction force within said water suctioning space (316), said spindle (42) having a spindle channel (421) fluidly connected between said middle connection hole (322) and said water suctioning space (316).

2. The electric water pump (2) as claimed in Claim 1, **characterized in that** said water suctioning unit (4) further includes a control module (45) attached to said heat dissipation cover (33).

3. The electric water pump (2) as claimed in Claims 1 or 2 , **characterized in that** said main casing (31) is composed of a casing body (314) and a cap body (313), said casing body (314) having two opposite ends respectively covered by said cap body and said motor cover, said cap body (313) having said inlet and outlet ports (311,312), said water suctioning space (316) being defined by said casing body (314) and said cap body (313).

4. The electric water pump (2) as claimed in Claims 2 or 3, **characterized in that** said machine body (3) further includes an auxiliary cover (35) that is connected to said heat dissipation cover (33) and that covers said control module (45).
